# EUROPÄISCHE PATENTSCHRIFT

(11) **EP 2 275 811 B1**
(45) Veröffentlichungstag und Bekanntmachung des Hinweises auf die Patenterteilung: **26.10.2011**
(21) Anmeldenummer: 09009131.5
(22) Anmeldetag: 13.07.2009
(51) Int. Cl.: G01N 31/12

(54) **Vorrichtung zur Bestimmung der Zusammensetzung einer insbesondere proteinhaltigen Probe**
Device for determining the composition of a sample, particularly one containing protein
Dispositif de détermination de la composition d'un échantillon, notamment contenant des protéines

(43) Veröffentlichungstag der Anmeldung: 19.01.2011
(73) Patentinhaber: ELTRA Entwicklungs- und Vertriebsgesellschaft von elektronischen und physikalischen Geräten mbH, 41469 Neuss (DE)
(72) Erfinder: Polemitis, Yiannakis, D-41469 Neuss (DE)
(74) Vertreter: Paul, Dieter-Alfred

(56) Entgegenhaltungen:
- EP-A- 0 060 681
- EP-A- 1 061 366
- DE-A1- 10 150 475
- DE-C1- 3 321 165
- US-A1- 2003 077 835
- US-A1- 2004 247 483

## Beschreibung

Die vorliegende Erfindung betrifft eine Vorrichtung zur Bestimmung der Zusammensetzung einer insbesondere proteinhaltigen Probe, mit einem Verbrennungsraum zur Verbrennung der zu analysierenden Probe, einer an den Verbrennungsraum angeschlossenen Abgasleitung, einer Heizeinrichtung zum Beheizen des Verbrennungsraums und einer Steuereinrichtung zur Steuerung der Verbrennung, wobei in den Verbrennungsraum eine Sauerstoffzuflussleitung mit einem Sauerstoffzuflussventil mündet, das über die Steuereinrichtung betätigbar ist und an den verbrennungsraum ein Analysator angeschlossen ist. Die Erfindung betrifft ferner ein verfahren zur Bestimmung der Zusammensetzung einer insbesondere proteinhaltigen Probe mit Hilfe der erfindungsgemäßen Vorrichtung.

Analysevorrichtungen dieser Art zur Bestimmung der Zusammensetzung aus den verbrennungsprodukten zu analysierender Materialien sind beispielsweise aus der DE 33 019 71 A1 bekannt. Dort wird ein U-förmiger Analyseofen beschrieben, mit dem der Kohlenstoff-, Wasserstoff- und Stickstoffgehalt einer organischen Probe nach deren verbrennung bestimmt werden kann. Die Probe wird hierzu in eine Zinnkapsel eingefüllt und auf einem Probenhalter positioniert, der sich in einem U-förmigen Verbrennungsrohr befindet. Das Verbrennungsrohr wird auf 1000°C erhitzt und die Probe von oben über eine Lanze mit Sauerstoff beströmt, wodurch die Probe verbrennt. Die bei der Verbrennung entstehenden Gase werden verschiedenen Trennungsschritten unterzogen, wobei der durch den ebenfalls in diesem Prozess verbrennende Zinnkapsel entstehende Staub abgefiltert wird. Die Verbrennungsgase werden durch kontinuierliche Zuführung von Sauerstoff in den Verbrennungsraum dem Analysator zugeführt.

Eine derartige Vorrichtung bringt verschiedene Nachteile mit sich. Zum Einen führt die kontinuierliche Zuführung von Sauerstoff und dessen Verwendung als Transportgas für die Verbrennungsgase zum Analysator zu einem erheblichen Verbrauch dieses Gases. Da der Sauerstoff zur Analyse wieder reduktiv entfernt werden muss, was üblicherweise mit Hilfe eines Kupfergranulats geschieht, ist das Verfahren kostspielig, nicht zuletzt auch aufgrund der bei diesem Verfahren zu verwendenden Einweg-Zinnkapseln.

Ein weiterer Nachteil ergibt sich aus dem Einsatz von Zinnkapseln für die Verbrennung, da diese unter den Verbrennungsbedingungen des Analyseofens zu Zinnoxid-Staub verbrennen, der den Innenraum des Ofens verschmutzt und den Einsatz eines Staubfilters erfordert, um die empfindlichen Detektoren vor dem Zinnoxid-Staub zu schützen. Eine weitere Schwierigkeit ergibt sich bei einem solchen Analyseofen daraus, dass die exakte quantitative Messung des Stickstoffgehaltes insbesondere bei Proben mit geringem Stickstoffanteil in Anwesenheit von hohen Sauerstoffkonzentrationen aus dem Trägergas problematisch ist. Als teilweise nachteilig kann außerdem angesehen werden, dass bei einer solchen Vorrichtung nur verhältnismäßig geringe Probenmengen, üblicherweise bis zu Größenordnungen von etwa 100 mg eingesetzt werden können. Dies kann bei stark inhomogenen Proben wie Kohle, Mehl, Fleisch, Tierfutter usw. zu nicht repräsentativen Messergebnissen führen. In jedem Falle ist die Probenvorbereitung bei solchen inhomogenen Proben schwierig und zeitaufwendig.

In der EP 1 207 390 wird ein Analyseofen beschrieben, mit dem die Bestimmung des Stickstoffgehaltes einer Probe auch bei geringen Stickstoffmengen selbst in Anwesenheit von relativ hohen Konzentrationen an Sauerstoff möglich ist. Dazu wird das bei der Verbrennung der Probe entstandene Gasgemisch über eine Wascheinrichtung geführt, in der das Verbrennungsgas weitestgehend vom Sauerstoff befreit wird. Die Übrigen Bestandteile des Verbrennungsgases werden anschließend über einen Sensor auf ihren Stickstoffgehalt hin untersucht. Die Entfernung großer Sauerstoffmengen ist jedoch apparativ aufwendig und der hohe Sauerstoffbedarf dieser Vorrichtung führt zu einer Erhöhung der Analysekosten.

Die WO 2006/074720 beschreibt einen Analyseofen, bei dem die bei der Verbrennung einer zu untersuchenden Probe entstehenden Verbrennungsgase über in Reihe geschaltete Adsorptionsfallen in ihre Bestandteile N₂, CO₂, H₂O und SO₂ aufgetrennt werden. Die Adsorptionsfallen sind dabei so ausgestaltet, dass sie selektiv jeweils ein einzelnes Verbrennungsprodukt adsorbieren. Im anschließenden Analyseschritt werden die Adsorptionsfallen einzeln nacheinander erhitzt, wodurch die adsorbierten Verbrennungsgase desorbiert werden und einer quantitativen Analyse unterzogen werden können. Diese Vorgehensweise erfordert einen aufwendigen apparativen Aufbau da für jeden zu analysierenden Bestandteil neben einem hierfür sensitiven Detektor zusätzlich ein ausreichend großes Adsorptionsvolumen geschaffen werden muss. Darüber hinaus kann die exakte Einstellung der einzelnen Adsorptionsbedingungen schwierig sein.

In der DE 33 21 165 C1 ist eine weitere Vorrichtung zur Bestimmung der Zusammensetzung einer Probe beschrieben-Diese umfasst einen Verbrennungsraum zur Verbrennung der zu analysierenden Probe sowie eine an den Verbrennungsraum angeschlossene Abgasleitung. In den Verbrennungsraum mündet eine Sauerstoffzuflussleitung mit einem Sauerstoffzuflussventil. An den Verbrennungsraum ist ferner ein Analysator angeschlossen. Des weiteren ist ein Sauerstoffsensor vorgesehen, über welchen während der Verbrennung der zu analysierenden Probe der Sauerstoffgehalt in den Verbrennungsgasen über den Verbrennungsverlauf bestimmt wird, wobei bei Unterschreiten einer vorgebbaren Sauerstoffkonzentration eine definierbare Menge an Sauerstoff in den Verbrennungsraum über das Sauerstoffzuflussventil eingefüllt wird und die Verbrennungsgase nach vollständiger Verbrennung der Probe dem Analysator zugeführt werden, wo insbesondere der Gehalt an Schwefeldioxid in den Verbrennungsgasen bestimmt wird.

Die Aufgabe der vorliegenden Erfindung besteht darin, eine Vorrichtung zur Bestimmung der Zusammensetzung einer insbesondere proteinhaltigen Probe zu entwerfen, welche die Zuführung unterschiedlichster Probenmengen insbesondere auch großer Probenmengen erlaubt und dabei mit einer möglichst geringen Menge an Sauerstoff eine vollständige Verbrennung des Probematerials erzielt.

Gelöst wird diese Aufgabe durch eine Vorrichtung und ein Verfahren mit den Merkmalen des kennzeichnenden Teils von Anspruch 1 bzw. Anspruch 9. Durch diese Ausgestaltung lässt sich mit der erfindungsgemäßen Vorrichtung der Stickstoff-, Wasserstoff-, Kohlenstoff- und/oder Schwefelgehalt der Probe ermitteln. Die erzielbare Nachweisgrenze für Stickstoff liegt insbesondere bei 0,01 Gew.-% Stickstoff in der zu analysierenden Probe.

Die erfindungsgemäße Vorrichtung ermöglicht die vollständige Verbrennung der zu analysierenden Probe mit einer möglichst geringen Menge an Sauerstoff. Dazu wird die Probe für die Verbrennung zunächst mit einer unterstöchiometrischen Menge an Sauerstoff umgesetzt und der Sauerstoffgehalt während des Verbrennungsvorgangs bestimmt. Wenn ein vorgegebener Mindestsauerstoffgehalt unterschritten wird, wird eine definierte Menge Sauerstoff in den Verbrennungsraum dosiert. Der Sauerstoffgehalt wird während der gesamten Verbrennung kontinuierlich überprüft und so lange sukzessive Sauerstoffgaben vorgenommen, bis der vorgegebene Mindestsauerstoffgehalt nicht mehr unterschritten wird.

Auf diese weise können sehr unterschiedliche Probenmengen analysiert werden, ohne dass es einer Anpassung der Vorrichtung hierfür bedürfte. Da auch der Sauerstoffverbrauch bezogen auf die Probenmasse stark von der Natur der Probe abhängt, bietet die erfindungsgemäße Vorrichtung auch diesbezüglich ein sehr hohes Maß an Flexibilität. Die erfindungsgemäße Vorrichtung erlaubt ferner die Verwendung wiederverwertbarer Keramiktiegel anstatt der bislang üblichen Einwegkapseln aus Zinn.

Die Vollständigkeit der Verbrennung kann beispielsweise dann als erreicht gelten, wenn die vorgebbare Sauerstoffkonzentration in einer vorgegebenen Zeitspanne nicht mehr unterschritten wird und/oder die Abnahme der Sauerstoffkonzentration eine vorgegebene zeitliche Änderung nicht mehr übersteigt. Dies können beispielsweise etwa 1 bis 2 Minuten sein. Auch wenn sich diese beiden Methoden als besonders praktikabel herausgestellt haben, können zur Feststellung des Zeitpunktes der vollständigen Verbrennung der Probe auch andere Kriterien herangezogen werden.

Die für die Auslösung einer Sauerstoffgabe vorgebbare Sauerstoffkonzentration, bei deren Unterschreiten dem Verbrennungsraum Sauerstoff zugeführt wird, kann auf beliebige Werte eingestellt werden. Besonders niedrige Grenzwerte für die Sauerstoffkonzentration führten zu einem besonders geringen Mehrverbrauch an Sauerstoff, erhöhen jedoch gleichzeitig die Analysendauer. Umgekehrt führt die Vorgabe von relativ hohen Grenzwerten für die Sauerstoffkonzentration zu einer verhältnismäßig schnellen Analyse bei jedoch potentiell größerem Sauerstoffverbrauch. Unter einem größeren Sauerstoffverbrauch wird vorliegend die Sauerstoffmenge verstanden, die zwar dem Verbrennungsraum zugeführt, jedoch nicht für die Verbrennung der Probe umgesetzt wird, da bereits der Zustand vollständiger Verbrennung erreicht ist. Auch wenn der Fachmann bei der wahl der geeigneten Sauerstoffgrenzwerte frei ist, haben sich Grenzwerte im Bereich von 1% bis 4% als Orientierungswerte herausgestellt.

Unter dem Begriff einer vollständigen Verbrennung der Probe wird verstanden, dass die Verbrennungsprodukte in ihrer unter den Verbrennungsbedingungen, beispielsweise 1000°C, Normaldruck, thermodynamisch stabilen Form vorliegen, d.h. Kohlenstoff als CO₂, Wasserstoff als H₂O, Stickstoff als NOₓ, also NO und/oder NO₂ und Schwefel als SO₂.

Nach einer Weiterbildung der erfindungsgemäßen Vorrichtung ist die Abgasleitung als Umlaufleitung ausgebildet, über welche die Verbrennungsgase während der Verbrennung der Probe aus dem Verbrennungsraum abgeführt und anschließend in den Verbrennungsraum zurückgeführt werden. Zusätzlich weist die Vorrichtung eine Fördereinrichtung auf, um die Verbrennungsgase während der Verbrennung der Probe durch die Umlaufleitung zu transportieren. Als Fördereinrichtung kommt beispielsweise eine Umwälzpumpe oder ein Kompressor in Frage. In weiterer Ausgestaltung ist der Sauerstoffsensor an der Umlaufleitung angeschlossen. Die Umwälzung der verbrennungsgase durch die Umwälzpumpe oder den Kompressor trägt zur Vollständigkeit der Verbrennung bei und führt außerdem zu einer Homogenisierung der Verbrennungsprodukte und des enthaltenen Sauerstoffs in dem zur Verfügung stehenden Gasvolumen, welches durch die Umwälzpumpe oder den Kompressor zirkuliert wird. Dadurch wird ebenfalls eine exaktere Bestimmung des Sauerstoffgehaltes durch den Sauerstoffsensor erzielt.

In der Abgasleitung kann dem Verbrennungsraum nachgeordnet ein Nachverbrennungsraum vorgesehen sein, dem eine Heizeinrichtung zugeordnet ist. Der Nachverbrennungsraum stellt sicher, dass nicht vollständig verbrannte Probenbestandteile aus dem Verbrennungsraum einer Nachverbrennung unterzogen werden. Zur Verbesserung der Nachverbrennung kann der Nachverbrennungsraum beispielsweise mit Keramikkugeln, Keramiksand und/oder einem oxidationskatalysator bestückt sein. Diese Befüllungen bewirken außerdem eine Homogenisierung der Verbrennungsgase. Als Oxidationskatalysator wird beispielsweise ein Platin-RhodiumKatalysator eingesetzt oder andere aus dem Automobilbereich bekannte Oxidationskatalysatoren.

Bei dieser Ausführungsform ist der Sauerstoffsensor zweckmäßiger Weise am Auslass des Nachverbrennungsraums angeordnet, da an dieser stelle das Verbrennungsgas/Sauerstoff-Gemisch verhältnismäßig gut homogenisiert ist. Der sauerstoffsensor kann als Sauerstoffelektrode, insbesondere als Lambda-Sonde ausgestaltet sein. Derartige Sauerstoffsensoren liefern zuverlässige Messergebnisse auch bei hohen Umgebungstemperaturen.

Der Verbrennungsraum und der Nachverbrennungsraum können unabhängig voneinander auf die üblicherweise für die Verbrennung einer Probe in reiner Sauerstoffatmosphäre erforderliche Temperatur erhitzt werden. Dies können beispielsweise Temperaturen von 800 bis 1200°c, bevorzugt etwa 1000°C sein. Die Verbrennungsgase werden bis zur vollständigen Verbrennung der Probe mittels einer Fördereinrichtung umgewälzt, indem sie vom Nachverbrennungsraum auslassseitig wieder dem Verbrennungsraum zugeführt werden.

Die Verbrennung der Probe wird weitestgehend isobar durchgeführt, d.h. bei konstantem Druck. Da jedoch bei der Verbrennung der Probe Abgase entstehen, vergrößert sich das Gasvolumen innerhalb der Vorrichtung während des Betriebs. Um dennoch den Druck innerhalb der zur Umgebung hin abgeschlossenen Vorrichtung konstant zu halten, ist ein Druckausgleichsraum mit einem veränderbaren Volumen vorgesehen. Dieser Druckausgleichsraum wird an die vom Nachverbrennungsratun abgehende Abgasleitung angeschlossen. Im Rahmen der vorliegenden Erfindung ist in der Abgasleitung ein Druckausgleichsraum vorgesehen der zwischen einem Druckausgleichsgefäß und einem darin durch ein Stellglied bewegbar geführten Kolben gebildet wird, wobei mittels Verstellung des Kolbens der Druck innerhalb der Vorrichtung eingestellt und/oder Sauerstoff über die Sauerstoffzuflussleitung in den Verbrennungsraum eingesaugt werden kann und/oder die Verbrennungsgase dem Analysator zugeführt werden können. Die Zuführung der Verbrennungsgase zum Analysator erfolgt beispielsweise über eine Analysatorleitung, an der das vom Druckausgleichsraum abgehende Teilstück der Abgasleitung über ein Zweiwegventil angekoppelt ist.

Das Stellglied kann motorisch angetrieben werden, wobei die Steuerung des Motors durch die Steuereinrichtung übernommen werden kann. Das Stellglied kann außerdem mit einem Drucksensor zur Messung des Drucks innerhalb der Vorrichtung verbunden sein. Auf diese Weise ist eine besonders exakte Einstellung und Einhaltung des gewünschten Drucks möglich.

Ein derart ausgestalteter Druckausgleichsraum erfüllt somit wenigstens drei unterschiedliche Funktionen. Zum Einen kann in Kombination mit einem Drucksensor der Druck innerhalb der Vorrichtung auf ein gewünschtes Niveau eingestellt werden. Daher ist es nicht erforderlich, die Vorrichtung druckfest auszulegen, wie dies beispielsweise bei Autoklaven der Fall ist. Die weitere, von dem Druckausgleichsraum erfüllt Funktion besteht in der exakten Zudosierung von Sauerstoff. Durch das Stellglied kann der Kolben in dem Druckausgleichsraum in sehr feinen Abstufungen bewegt werden, wodurch genau einstellbare Sauerstoffvolumina in den Verbrennungsraum eingesogen werden. Schließlich können mittels Verstellung des Kolbens die im Druckausgleichsraum befindlichen Verbrennungsgase dem Analysator zugeführt werden.

Nach einer weiteren Ausführungsform der erfindungsgemäßen Vorrichtung durchsetzt das vom Druckausgleichsraum wegführende Teilstück der Abgasleitung den Kolben und wird bevorzugt bei einer Verstellung des Kolbens mitgeführt. Die Integration der Abgasleitung in den Kolben stellt sicher, dass der Druckausgleichsraum seine Funktion in jedweder Kolbenposition erfüllen kann, insbesondere, wenn die Zuführung der Abgase durch den Boden des Druckausgleichsgefäßes erfolgt. Im übrigen werden bei einer solchen Anordnung Zuführung und Ableitung der Verbrennungsgase räumlich getrennt, so dass im Druckausgleichsraum zusätzlich eine weitere Homogenisierung der Verbrennungsgase mit dem in der Gasatmosphäre enthaltenen Sauerstoff erfolgen kann. Diese ermöglicht es ferner, möglicherweise gebildetes Kondenswasser am Boden des Druckausgleichsgefäßes abzuziehen. Hierzu kann die Vorrichtung zumindest einen Wasserabscheider aufweisen, wobei die abgeschiedene wassermenge vorzugsweise bestimmbar ist.

Mit Hilfe der erfindungsgemäßen Vorrichtung kann die zu analysierende Probe auf ihren Stickstoff-, Kohlenstoff-, Schwefel- und/oder Wasserstoffgehalt hin untersucht werden. Hierzu umfasst der Analysator in bevorzugter Weise zumindest einen Stickstoff- und/oder einen Kohlenstoffdioxid- und/oder einen Schwefeldioxid- und/oder einen Feuchtigkeitssensor. Mit Ausnahme des Sensors zur Stickstoffbestimmung sind diese Sensoren beispielsweise als Infrarotdetektoren ausgebildet. Der Sensor zur Stickstoffbestimmung kann über einen Wärmeleitfähigkeitsfühler realisiert werden, auch wenn selbstverständlich andere geeignete Sensoren zum Einsatz kommen können. Die Zuführung der Verbrennungsgase zum Kohlendioxid-, Feuchtigkeits-, Schwefeldioxid- und/oder Schwefeltrioxidsensor erfolgt vorzugsweise über eine Verstellung des Kolbens im Druckausgleichsgefäß. Durch diese Art der Zuführung der Verbrennungsgase kann an dieser Stelle auf ein Trägergas verzichtet werden, was Kostenvorteile mit sich bringt. Außerdem werden so keine möglicherweise die Messungen störenden Ballastgase eingespeist.

Zur zielgerichteteren Zuführung des Sauerstoffs zur verbrennenden Probe kann dieser über eine an die Sauerstoffzuflussleitung angekoppelte Sauerstofflanze in die Nähe der zu verbrennenden Probe geführt werden. Die Probe kann auf einem Probenhalter befestigt werden, der insbesondere einen keramischen Tiegel umfasst, und vorzugsweise von unten in den Verbrennungsraum eingeführt wird. Keramische Tiegel zeichnen sich im Gegensatz zu den üblicherweise eingesetzten Zinntiegeln dadurch aus, dass sie mehrfach verwendbar sind und nicht zu Verschmutzungen der Vorrichtung führen.

In einer Weiterbildung der erfindungsgemäßen Vorrichtung umfasst der Analysator zumindest einen Sensor zur Stickstoffbestimmung, dem ein Gasprobenraum zur Aufnahme eines definierten Verbrennungsgasvolumens vorgeschaltet ist. Der Gasprobenraum kann hierzu über Verstellung eines Kolbens eines Druckausgleichsgefäßes mit Verbrennungsgasen befüllt werden, nachdem die zu analysierende Probe vollständig verbrannt ist. In den Gasprobenraum kann ferner eine Trägergaszuflussleitung über einen Durchflussregler münden. Über diese Trägergaszuflussleitung kann das definierte Verbrennungsgasvolumen mittels eines Trägergases wie beispielsweise Helium oder Kohlendioxid dem Sensor zur Stickstoffbestimmung zugeführt werden.

Für eine exakte Bestimmung des Stickstoffgehaltes aus diesem Verbrennungsgasvolumen ist es vorteilhaft, die Messung störende Komponenten wie beispielsweise Sauerstoff aus den Verbrennungsgasen zu entfernen. Dies kann über eine an sich bekannte Sauerstofffalle geschehen, die den in den Verbrennungsgasen enthaltenen Sauerstoff oxidativ bindet. Gleichzeitig sollte für eine möglichst exakte Bestimmung des Stickstoffgehaltes die in den Verbrennungsabgasen enthaltenen Stickoxide in molekularen Stickstoff (N₂) überführt werden. Zu diesem Zweck wird das Verbrennungsgasvolumen über einen Stickoxid-Reduktionskatalysator geführt. Diese beiden Funktionen können entweder in zwei verschiedenen Einrichtungen oder auch in einer Einheit realisiert werden. Ein beheizter Kupfer-, Molybdän- oder Wolframkatalysator erfüllt beispielsweise beide Anforderungen. Diese Katalysatormaterialien werden beispielsweise in Form feinmaschiger Netze oder als Granulate verwendet und auf eine Temperatur von 700 bis 800°C erhitzt.

Die über die einzelnen Sensoren ermittelten Werte für Stickstoff, Kohlenstoff, Schwefel und Wasserstoff lassen sich über das Probengewicht in Gewichtsprozente dieser Elemente an der Zusammensetzung der Probe umrechnen.

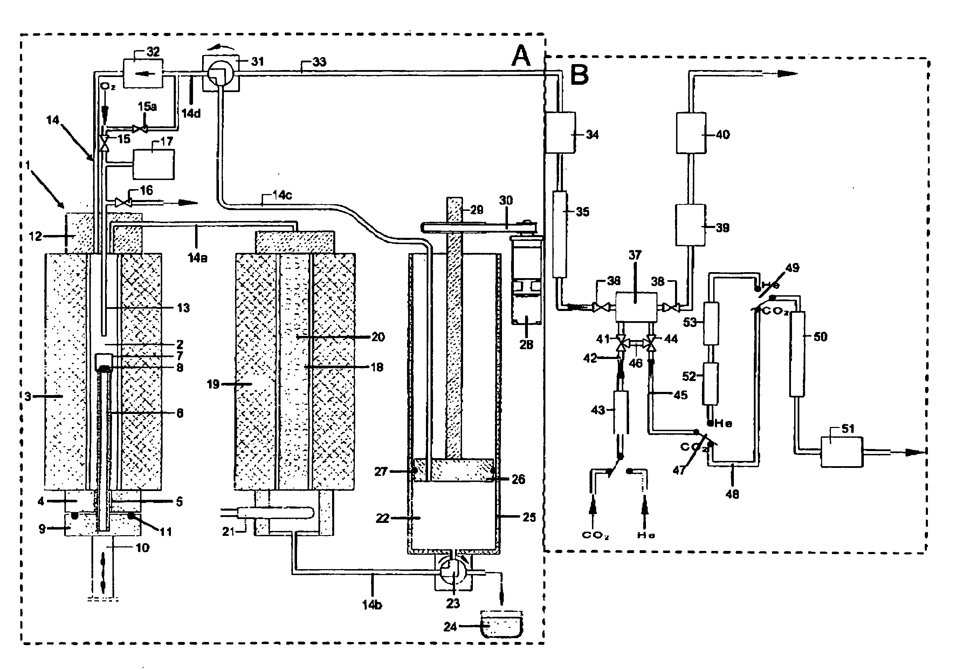

In der Zeichnung ist die Erfindung anhand eines Ausführungsbeispiels näher veranschaulicht.

In der einzigen Figur ist eine erfindungsgemäße Vorrichtung zur Bestimmung der Zusammensetzung mit einer Verbrennungseinheit A und einem Analysator B dargestellt. Die Verbrennungseinheit A weist eine Verbrennungseinrichtung 1 mit einem Verbrennungsraum 2 und einer diesen einfassenden Heizeinrichtung 3 in Form einer elektrischen Widerstandsheizung auf. Die Verbrennungseinrichtung 1 besitzt an ihrer Unterseite eine Anschlagfläche 4, die eine Öffnung 5 zur Durchführung eines Probenhalters in Form eines Tiegelträgers 6 besitzt, auf dem ein Tiegel 7 aus Keramik mit einer zu analysierenden Probe 8 fixiert ist. Der Tiegelträger 6 ist an einer mittels einer vertikal über einen Pneumatikantrieb beweglichen Welle 10 angebracht, die eine Anschlagfläche 9 besitzt. Zwischen den Anschlagflächen 4 und 9 ist ein Dichtring 11 angeordnet, der den Verbrennungsraum 2 unterseitig gegenüber der Umgebung gasdicht abschließt.

Die offene Oberseite des Verbrennungsraums 2 ist durch einen Deckel 12 verschlossen, der von einer Sauerstoffzuflussleitung 13 durchsetzt ist. Die Sauerstoffzuflussleitung 13 ist als sauerfstofflanze ausgebildet, deren Auslass sich unmittelbar über der zu analysierenden Probe 8 befindet. Die Sauerstoffzuflussleitung 13 ist an eine vorliegend nicht dargestellte Sauerstoffquelle angeschlossen, von der Sauerstoff über ein in der Sauerstoffzuflussleitung 13 vorgesehenes Sauerstoffzuflussventil 15 in den Verbrennungsraum dosiert wird. Das Sauerstoffzuflussventil 15 ist mit einer nicht dargestellten Steuereinrichtung gekoppelt. An die Sauerstoffzuflussleitung 13 ist ein Überschussauslassventil 16 angekoppelt, über das beispielsweise überschüssiger Sauerstoff an die Umgebung abgegeben werden kann. Mit Hilfe eines an die Sauerstoffzuflussleitung 13 angeschlossenen Drucksensors 17 kann der Innendruck in der Vorrichtung, insbesondere im Bereich der Verbrennungseinheit A gemessen werden. Der Drucksensor 17 ist mit der Steuereinrichtung verbunden. Die als Umlaufleitung 14 ausgebildete Abgasleitung besteht aus mehreren Teilstücken 14a-d, über die die Verbrennungsgase vom verbrennungsraum 2 über das Abgasleitungsteilstück 14a abgeführt und diesem nach Vollendung des Kreislaufs über das Abgasleitungsteilstück 14d wieder zugeführt werden. Das Abgasleitungsteilstück 14d ist außerdem über ein Ventil 15a mit der Sauerstoffquelle verbunden. Die Abgasleitungsteilstücke 14a und 14d durchsetzen hierzu benachbart jeweils den Deckel 12 des Verbrennungsraums 2.

Das Abgasleitungsteilstück 14a endet vom Verbrennungsraum 2 ausgehend in einem Nachverbrennungsraum 18, welcher von einer Heizeinrichtung 19 in Form einer elektrischen Widerstandsheizung eingefasst und mit einem Katalysator 20 befüllt ist. An den Nachverbrennungsraum 18 schließt sich auslassseitig ein mit der Steuereinrichtung verbundener Sauerstoffsensor in Form einer Lambda-Sonde 21 sowie das Abgasleitungsteilstück 14b an, das in einen Druckausgleichsraum 22 mündet. In das Abgasleitungsteilstück 14b ist ein Wasserabscheideventil 23 integriert, über das eventuell gebildetes Kondenswasser in einen Wasserabscheider 24 abgeführt werden kann.

Der Druckausgleichsraum 22 wird zwischen einem Druckausgleichsgefäß 25 und einem in diesem verdrehungssicher geführten Kolben 26 gebildet und über einen Kolbenring 27 gegenüber der Umgebung abgedichtet. Der Kolben 26 ist über einen mit der Steuereinrichtung verbundenen Antrieb 28 mittels eines als Gewindestange 29 ausgeformten Stellglieds vertikal verstellbar gehalten, wobei die Kraftübertragung vom Antrieb 28 auf die Gewindestange 29 mittels eines Zahnriemens 30 vollzogen wird.

Das vom Druckausgleichsraum 22 abgehende Abgasleitungsteilstück 14c durchsetzt den Kolben 26 und ist so ausgestaltet, dass es bei einer Verstellung des Kolbens 26 mitgeführt wird. Es führt zu einem Zweiwegeventil 31, von dem das Abgasleitungsteilstück 14d durch den Deckel 12 in den Verbrennungsraum 2 zurückgeführt ist. In das Abgasleitungsteilstück 14d ist eine als Umwälzpumpe 32 ausgebildete Fördereinrichtung integriert. Neben den Abgasleitungsteilstücken 14c und 14d schließt sich an das zweiwegeventil 31 eine Analysatorleitung 33 an, welche von der Verbrennungseinheit A zum Analysator B führt.

Die Analysatorleitung 33 führt über einen Feuchtigkeits/H₂O-Infrarotdetektor 34 sowie einen Wasserabsorber 35 und mündet regelbar über ein Ventil 36 in einen Gasprobenraum 37. Dieser ist durch ein Ventil 38 trennbar mit einem CO₂-Infrarotdetektor 39 sowie einem SO₂-Infrarotdetektor 40 verbunden.

Eine an eine Trägergasquelle angeschlossene Trägergaszuflussleitung 42 führt über einen Durchflussregler 43 und ein Ventil 41 absperrbar in den Gasprobenraum 37, wobei die Trägergasquelle wahlweise CO₂ und/oder Helium liefert. Von dem Gasprobenraum 37 führt über ein Ventil 44 eine Trägergasabflussleitung 45 weg, wobei sich zwischen den Ventilen 41 und 44 ein Bypass 46 befindet.

Die Trägergasabflussleitung 45 führt über ein Ventil 47 zu einer Leitung 48 mit der durch ein Ventil 49 eine kombinierte Sauerstofffalle/ Stickoxidreduktionsmittel 50 mit beheizbarem Kupfergranulat verbunden ist, an den sich ein Wärmeleitfähigkeitsdetektor 51 anschließt. Parallel zu der Leitung 48 ist zwischen den Ventilen 47 und 49 ein Kohlendioxidabsorber 52 und ein Wasserabsorber 53 angeordnet, für den Fall, dass Helium als Trägergas gewählt wird.

Im folgenden wird der Verfahrensablauf beim Betrieb der in der Figur dargestellten Vorrichtung erläutert. Die zu analysierende Probe 8 wird im Tiegel 7 abgewogen und dieser auf dem Tiegelträger 6 fixiert. Der Tiegelträger 6 befindet sich hierbei unterhalb des Verbrennungsraums 2 da sich die welle 10 des pneumatischen Antriebes in ihrer unteren vertikalen Position befindet.

Das Ventil 15a wird geöffnet und hierüber der Verbrennungsraum 2, die Umlaufleitung 14, der Nachverbrennungsraum 18 und der Druckausgleichsraum 22 vollständig mit Sauerstoff geflutet. Durch kurzes Öffnen des Sauerstoffzuflussventils 15 wird die Sauerstoffzuflussleitung 13 mit Sauerstoff gespult. Die Umwälzpumpe 32 wird auf niedriger Leistung angeschaltet und so ebenfalls mit Sauerstoff gefüllt. Das Wasserabscheideventil 23 ist geschlossen und das Zweiwegeventil 31 verbindet die Abgasleitungsteilstücke 14c und 14d, wodurch der Analysator B abgekoppelt ist.

Nachdem der gesamte Innenraum und das Gasführungssystem mit Sauerstoff geflutet sind und ein vorhandener Überschuss aus dem Verbrennungsraum 2 durch die in der Anschlagfläche 4 befindliche Öffnung 5 geströmt ist, wird die Probe über die pneumatisch angetriebene Welle 10 in den Verbrennungsraum 2 eingeführt, bis die Anschlagfläche 9 gegen die Anschlagfläche 4 läuft und der verbrennungsraum 2 über den Dichtring 11 abgedichtet ist. Das Sauerstoffzuflussventil 15 wird geschlossen, und der Verbrennungsraum 2 sowie der Nachverbrennungsraum 18 werden über die Heizeinrichtungen 3 und 19 auf ca. 1000°C erhitzt, wodurch die Probe 8 verbrennt. Im Dauerbetrieb werden der Verbrennungsraum 2 sowie der Nachverbrennungsraum 18 dauerhaft auf dieser Temperatur gehalten. Die Verbrennungsgase werden über die Umwälzpumpe 32 über das Abgasleitungsteilstück 14a in den Nachverbrennungsraum 18 geführt, wo sich, unterstützt durch dem Katalysator 20, eine Nachverbrennung nicht vollständig verbrannter Bestandteile der Probe 8 vollzieht.

Der Sauerstoffgehalt des Verbrennungsgas/Sauerstoff-Gemischs wird hinter dem Nachverbrennungsraum 18 durch die Lambda-Sonde 21 gemessen wobei die Messsignale an die Steuereinrichtung weitergeleitet werden. Bei Unterschreiten einer vorgegebenen Sauerstoffmindestkonzentration wird durch die Steuereinrichtung das Sauerstoffzuflussventil 15 und das Überschussauslassventil 16 geöffnet und der Kolben 26 über den Antrieb 28 um eine vorgegebene Strecke nach oben gezogen, wodurch sich das Volumen des Druckausgleichsraums 22 vergrößert und Sauerstoff über das nun geöffnete Sauerstoffzuflussventil 15 und die Sauerstofflanze 13 in den Verbrennungsraum 2 gesaugt wird. Dort dient dieser der weiteren Verbrennung der Probe 8.

Nachdem das Volumen des Druckausgleichsraums 22 um den gewünschten Betrag vergrößert wurde, wird das Sauerstoffzuflussventil 15 und das Überschussauslassventil 16 geschlossen und das Verbrennungsgas/Sauerstoff-Gemisch weiterhin kontinuierlich über die Umwälzpumpe 32 durch den Verbrennungsraum 2, den Nachverbrennungsraum 18, den Druckausgleichsraum 22 sowie die Abgasleitung 14 umgewälzt.

Während des gesamten Verbrennungsvorgangs wird mittels des Drucksensors 17 der Innendruck in diesem System überprüft. Bei Überschreiten oder Unterschreiten eines vorgegebenen Wertes wird das Volumen des Druckausgleichsraums 22 durch die Steuereinrichtung über den Antrieb 28 so verändert, dass sich der vorgegebene Innendruck wieder einstellt. Außerdem können während des Verbrennungsvorgangs die Detektoren 34, 39 und 40 kalibiert werden. Dazu kann an der Analysatorleitung 33 ein aus vereinfachungsgründen nicht dargestelltes Sauerstoffspülventil vorgesehen sein, über das Sauerstoff in die Analysatorleitung 33 gefördert werden kann und den Feuchtigkeitsdetektor 34, den Wasserabsorber 35, den Gasprobenraum 37, den CO₂-Detektor 39 sowie den SO₂-Detektor 40 mit Sauerstoff flutet. Die mit Sauerstoff gefüllten Detektoren 34, 39 und 40 können jetzt auf ihre Nulllinie kalibriert werden. Bevor die Verbrennungsgase in die Analysatorleitung 33 gefördert werden, wird das Sauerstoffspülventil geschlossen und der Sauerstoffspülvorgang der Detektoren 34, 39 und 40 damit gestoppt.

Dieser Prozess aus Sauerstoffgehaltbestimmung und Zugabe einer definierten Sauerstoffmenge bei Unterschreiten einer Sauerstoffmindestkonzentration wird solange durchgeführt, bis die Sauerstoffmindestkonzentration beispielsweise über einen Zeitraum von etwa 1 bis 2 Minuten nicht mehr unterschritten wird. In diesem zustand ist die Probe 8 vollständig verbrannt.

Nachdem der Verbrennungsvorgang beendet ist, wird die Umwälzpumpe 32 abgestellt und das Zweiwegeventil 31 umgelegt, wodurch die Umlaufleitung 14 unterbrochen und das Abgasleitungsteilstück 14c mit der Analysatorleitung 33 verbunden wird. Mit Hilfe des Antriebs 28 wird der Kolben 26 zur Verkleinerung des Druckausgleichsraums 22 in den Druckausgleichsgefäß 25 hineingefahren, wodurch die Verbrennungsgase über das Abgasleitungsteilstück 14d, das Zweiwegeventil 31 und die Analysatorleitung 33 durch den Feuchtigkeitsdetektor 34 fließen. Aus dem Messsignal des Feuchtigkeitsdetektors 34 kann der prozentuale wassergehalt in den Verbrennungsgasen bestimmt werden, woraus sich wiederum der Anteil an Wasserstoff in der Probe 8 errechnen lässt.

Die Verbrennungsgase werden über den wasserabsorber 35 geführt, dabei vollständig getrocknet und strömen dann über die geöffneten Ventile 36 und 38 durch den Gasprobenraum 37, wobei die Ventile 41 und 44 gegenüber dem Gasprobenraum 37 geschlossen sind. Der Gasprobenraum 37 wird dabei vollständig mit den Verbrennungsgasen geflutet. Durch das geöffnete Ventil 44 werden die verbrennungsgase über den CO₂-Detektor 39 sowie den SO₂-Detektor 40 geführt, die den prozentualen Gehalt an Kohlendioxid bzw. Schwefeldioxid SO₂ in den Verbrennungsgasen bestimmen. Aus den ermittelten Werten kann auf den Kohlenstoffgehalt sowie den Schwefelgehalt der Probe 8 geschlossen werden.

Während dieses Analysevorgangs strömt ein Trägergas, beispielsweise Helium, über den Durchflussregler 43 durch die Trägergaszuflussleitung 42, das Ventil 41, den Bypass 46 und das Ventil 44 in die Trägergasabflussleitung 45. Die Ventile 36 und 38 werden dann geschlossen und die Ventile 41 und 44 aktiviert, so dass die Bypassleitung 46 geschlossen wird und die Leitung 42 und 45 mit dem Gasprobenraum 37 verbunden sind. Der Heliumstrom fließt damit über die Trägergaszuflussleitung 42 in den Gasprobenraum 37 und verdrängt dort die Verbrennungsgase in Richtung der Trägergasabflussleitung 45. Auf diesem Wege wird eine Mischung aus Trägergas und Verbrennungsgasen über das Ventil 47 durch den Kohlendioxidabsorber 52, den Wasserabsorber 53, das Ventil 49 sowie die kombinierte Sauerstofffalle/ Stickoxidreduktionsmittel 50 geführt.

Falls CO₂ als Trägergas verwendet wird, fließt das Trägergas/verbrennungsgasgemisch anstatt über den Kohlendioxidabsorber 52 und den Wasserabsorber 53 über die Leitung 48 zum beheizten Kupfergranulat 50.

In der kombinierten Sauerstofffalle/ Stickoxidreduktionsmittel 50 wird möglicher Restsauerstoff durch Oxidation des Kupfergranulats entfernt und die in den Verbrennungsgasen enthaltenen Stickoxide zu molekularem Stickstoff (N₂) reduziert. Der gesamte in den Verbrennungsgasen enthaltene Stickstoff liegt nun in Form von molekularem Stickstoff vor, der mittels des Wärmeleitfähigkeitsdetektors 51 integral bestimmt wird. Da das Volumen des Gasprobenraums 37 bekannt ist, kann hierdurch der prozentuale Stickstoffgehalt-in den Verbrennungsgasen ermittelt werden, woraus sich der Stickstoffgehalt der Probe 8 errechnen lässt.

## Patentansprüche

1. Vorrichtung zur Bestimmung der Zusammensetzung einer insbesondere proteinhaltigen Probe (8), mit einem Verbrennungsraum (2) zur Verbrennung der zu analysierenden Probe (8), einer an den Verbrennungsraum (2) angeschlossenen Abgasleitung (14), einer Heizeinrichtung (3) zum Beheizen des Verbrennungsraums (2), einem Sauerstoffsensor (21) zur Bestimmung des Sauerstoffgehalts in den Verbrennungsgasen und einer Steuereinrichtung zur Steuerung der Verbrennung, wobei in den Verbrennungsraum (2) eine Sauerstoffzuflussleitung (13) mit einem Sauerstoffzuflussventil (15) mündet, das über die Steuereinrichtung betätigbar ist und an den Verbrennungsraum (2) ein Analysator (B) angeschlossen ist, wobei die Vorrichtung derart ausgestaltet ist, dass der Sauerstoffgehalt in den Verbrennungsgasen während der Verbrennung der Probe (8) in zeitlichen Abständen oder kontinuierlich mittels des Sauerstoffsensors (21) bestimmt wird und bei Unterschreiten einer vorgebbaren Sauerstoffkonzentration eine definierbare Menge an Sauerstoff in den Verbrennungsraum (2) über das Sauerstoffzuflussventil (15) eingefüllt wird und die Verbrennungsgase nach vollständiger Verbrennung der Probe (8) dem Analysator (B) zugeführt werden, wo insbesondere der Gehalt an Stickstoff und/oder Kohlendioxid und/oder Schwefeldioxid und/oder Wasser in den Verbrennungsgasen bestimmt wird, **dadurch gekennzeichnet, dass** der Sauerstoffsensor (21) an die Steuereinrichtung angeschlossen ist und in der Abgasleitung (14) ein Druckausgleichsraum (22) vorgesehen ist, der zwischen einem Druckausgleichsgefäß (25) und einem darin durch ein Stellglied (29) bewegbar geführten Kolben (26) gebildet wird, wobei mittels Verstellung des Kolbens (26) der Druck innerhalb der Vorrichtung eingestellt und/oder Sauerstoff über die Sauerstoffzuflussleitung (13) in den Verbrennungsraum (2) eingesaugt werden kann und/oder die Verbrennungsgase dem Analysator (B) zugeführt werden können.

2. Vorrichtung nach Anspruch 1, **dadurch gekennzeichnet, dass** die Abgasleitung als Umlaufleitung (14) ausgebildet ist, über welche die Verbrennungsgase während der Verbrennung der Probe (8) aus dem Verbrennungsraum (2) abgeführt und anschließend in den Verbrennungsraum (2) zurückgeführt werden, und eine Fördereinrichtung, insbesondere eine Umwälzpumpe (32) oder ein Kompressor, zum Transportieren der Verbrennungsgase durch die Umlaufleitung (14) vorgesehen ist, wobei der Sauerstoffsensor (21) bevorzugt an der Umlaufleitung (14) angeordnet ist.

3. Vorrichtung nach Anspruch 1 oder 2, **dadurch gekennzeichnet, dass** in der Abgasleitung (14) dem Verbrennungsraum (2) nachgeordnet ein Nachverbrennungsraum (18) vorgesehen ist, dem eine Heizeinrichtung (19) zugeordnet ist.

4. Vorrichtung nach Anspruch 3, **dadurch gekennzeichnet, dass** der Nachverbrennungsraum (18) mit einem Oxidationskatalysator (20), Keramikkugeln und/oder Keramiksand bestückt ist, und dass der Sauerstoffsensor (21) vorzugsweise an der Auslassseite des Nachverbrennungsraums (18) vorgesehen ist.

5. Vorrichtung nach einem der vorstehenden Ansprüche, **dadurch gekennzeichnet, dass** der Druckausgleichsraum (22) stromabwärts des dem Verbrennungsraum (2) nachgeordneten Nachverbrennungsraums (18) vorgesehen ist.

6. Vorrichtung nach einem der vorstehenden Ansprüche, **dadurch gekennzeichnet, dass** das Stellglied (29) mit einem Drucksensor (17) zur Messung des Drucks innerhalb der Vorrichtung verbunden ist.

7. Vorrichtung nach einem der vorstehenden Ansprüche, **dadurch gekennzeichnet, dass** das vom Druckausgleichsraum (22) wegführende Teilstück (14c) der Abgasleitung (14) den Kolben (26) durchsetzt und bevorzugt bei einer Verstellung des Kolbens (16) mitgeführt wird.

8. Vorrichtung nach einem der vorstehenden Ansprüche, **dadurch gekennzeichnet, dass** der Analysator (B) einen Sensor zur Stickstoffbestimmung (51) umfasst, dem ein Gasprobenraum (37) zur Aufnahme eines definierten Verbrennungsgasvolumens vorgeschaltet ist, und dass eine Trägergaszuflussleitung (42) über einen Durchflussregler (43) in den Gasprobenraum (37) mündet.

9. Verfahren zur Bestimmung der Zusammensetzung einer insbesondere proteinhaltigen Probe (8), bei dem die zu analysierende Probe (8) in einer Sauerstoffatmosphäre vollständig verbrannt wird und die Zusammensetzung der entstandenen Verbrennungsgase anschließend bestimmt wird, wobei der Sauerstoffgehalt in den Verbrennungsgasen während der Verbrennung der Probe (8) in zeitlichen Abständen oder kontinuierlich über einen Sauerstoffsensor (21) bestimmt wird, wobei beim Unterschreiten einer vorgebbaren Sauerstoffkonzentration eine definierbare Menge an Sauerstoff der Verbrennung zugeführt wird, und dass nach vollständiger Verbrennung der Probe (8) die entstandenen Verbrennungsgase einem Analysator (B) zugeführt werden, wo insbesondere der Gehalt an Stickstoff und/oder Kohlendioxid und/oder Schwefeldioxid und/oder Wasser in den Verbrennungsgasen bestimmt wird, **dadurch gekennzeichnet, dass**, der Druck in der Vorrichtung mittels eines über die Abgasleitung (14) verbundenen Druckausgleichsraums (22) eingestellt wird, der zwischen einem Druckausgleichsgefäß (25) und einem darin durch ein Stellglied (29) bewegbar geführten Kolben (26) gebildet wird, wobei mittels Verstellung des Kolbens (26) der Druck innerhalb der Vorrichtung eingestellt und/oder Sauerstoff über die Sauerstoffzuflussleitung (13) in den Verbrennungsraum (2) eingesaugt wird und/oder die Verbrennungsgase dem Analysator (B) zugeführt werden.

10. Verfahren nach Anspruch 9, **dadurch gekennzeichnet, dass** die Vollständigkeit der Verbrennung dann als erreicht gilt, wenn die vorgebbare Sauerstoffkonzentration in einer vorgegebenen Zeitspanne nicht mehr unterschritten wird und/oder die Abnahme der Sauerstoffkonzentration eine vorgegebene zeitliche Änderung nicht mehr übersteigt.

11. Verfahren nach Anspruch 9 oder 10, **dadurch gekennzeichnet, dass** die Verbrennung der Probe (8) in einem beheizten Verbrennungsraum (2) durchgeführt wird, an den eine als Umlaufleitung (14) ausgebildete Abgasleitung angeschlossen ist, durch welche die Verbrennungsgase bis zur vollständigen Verbrennung der Probe (8) aus dem Verbrennungsraum (2) abgezogen und diesem wieder zugeführt werden.

12. Verfahren nach Anspruch 11, **dadurch gekennzeichnet, dass** in der Umlaufleitung (14) bevorzugt ein beheizter Nachverbrennungsraum (18) vorgesehen ist, in dem die aus dem Nachverbrennungsraum (2) kommenden Verbrennungsgase einer Nachverbrennung unterzogen werden.

13. Verfahren nach einem der Ansprüche 9 bis 12, **dadurch gekennzeichnet, dass** der Druckausgleichsraum (22) an der Auslassseite des Nachverbrennungsraums (18) angeordnet ist.

14. Verfahren nach einem der Ansprüche 9 bis 13, **dadurch gekennzeichnet, dass** über einen Drucksensor (17) der Druck innerhalb der Vorrichtung gemessen und das Stellglied (29) so betätigt wird, dass ein gewünschter Druck eingestellt wird.

15. Verfahren nach einem der Ansprüche 9 bis 14, **dadurch gekennzeichnet, dass** der Analysator (B) einen Sensor zur Stickstoffbestimmung (51) umfasst, dem ein Gasprobenraum (37) mit einem definierten Verbrennungsgasvolumen vorgeschaltet ist, das mit Verbrennungsgasen vollständig befüllt und anschließend von Sauerstoff befreit wird, enthaltene Stickoxide in Stickstoff (N₂) umgewandelt werden und dem Sensor zur Stickstoffbestimmung (51) zugeführt wird.

## Claims

1. An apparatus for determining the composition of a specimen (8), in particular one containing protein, having a combustion chamber (2) for the combustion of the specimen (8) to be analysed, an exhaust gas line (14) connected to the combustion chamber (2), a heating device (3) for heating the combustion chamber (2), an oxygen sensor (21) for determining the oxygen content in the combustion gases and a control device for controlling the combustion, an oxygen inflow line (13) opening out into the combustion chamber (2) and having an oxygen inflow valve (15) which can be operated by means of the control device, and an analyser (B) being connected to the combustion chamber (2), wherein the apparatus is designed such that the oxygen content in the combustion gases is determined by means of the oxygen sensor (21) at intervals of time or continuously during combustion of the specimen (8), and if a pre-specifiable concentration of oxygen is not achieved, a definable quantity of oxygen is injected into the combustion chamber (2) by means of the oxygen inflow valve (15), and after complete combustion of the specimen (8) the combustion gases are delivered to the analyser (B) where, in particular, the nitrogen and/or carbon dioxide and/or sulphur dioxide and/or water content in the combustion gases is determined, **characterised in that** the oxygen sensor (21) is connected to the control device and in the exhaust gas line (14) a pressure compensation chamber (22) is provided, which is formed between a pressure compensation vessel (25) and a piston moveably guided therein by means of a positioning member (29), by adjusting the piston (26) the pressure within the apparatus being set and/or it being possible for oxygen to be sucked into the combustion chamber (2) via the oxygen inflow line (13) and/or it being possible for the combustion gases to be delivered to the analyser (B).

2. The apparatus according to Claim 1, **characterised in that** the exhaust gas line is in the form of a bypass line (14) by means of which during combustion of the specimen (8) the combustion gases are discharged from the combustion chamber (2) and then conveyed back into the combustion chamber (2), and a conveying device, in particular a circulation pump (32) or a compressor is provided for conveying the combustion gases through the bypass line (14), the oxygen sensor (21) preferably being disposed on the bypass line (14).

3. The apparatus according to Claim 1 or 2, **characterised in that** in the exhaust gas line (14) a post-combustion chamber (18) is provided downstream of the combustion chamber (2) to which a heating device (19) is assigned.

4. The apparatus according to Claim 3, **characterised in that** the post-combustion chamber (18) is equipped with an oxidation catalyst (20), ceramic balls and/or ceramic sand and that the oxygen sensor (21) is preferably provided on the outlet side of the post-combustion chamber (18).

5. The apparatus according to any of the preceding claims, **characterised in that** the pressure compensation chamber (22) is provided downstream of a post-combustion chamber (18), which is positioned downstream of the combustion chamber (2) .

6. The apparatus according to Claim 5, **characterised in that** the positioning member (29) is connected to a pressure sensor (17) for measuring the pressure within the apparatus.

7. The apparatus according to Claim 5 or 6, **characterised in that** the section (14c) of the exhaust gas line (14) leading away from the pressure compensation chamber (22) passes through the piston (26) and is preferably entrained with an adjustment of the piston (16).

8. The apparatus according to any of the preceding claims, **characterised in that** the analyser (B) comprises a sensor for determining nitrogen (51) upstream of which there is a gas specimen chamber (37) for accommodating a defined volume of combustion gas and that a carrier gas inflow line (42) opens out into the gas specimen chamber (37) via a through flow regulator (43).

9. A method of determining the composition of a specimen (8), in particular one containing protein, wherein the specimen (8) to be analysed is completely combusted in an oxygen atmosphere and the composition of the combustion gases produced is then determined, **characterised in that** the oxygen content in the combustion gases is determined by means of an oxygen sensor (21) at intervals of time or continuously during combustion of the specimen (8), and if a pre-specifiable concentration of oxygen is not achieved, a definable quantity of oxygen is delivered to the combustion, and that after complete combustion of the specimen (8) the resulting combustion gases are delivered to an analyser (B) where, in particular, the nitrogen and/or carbon dioxide and/or sulphur dioxide and/or water content in the combustion gases is determined.

10. The method according to Claim 9, **characterised in that** completeness of combustion is considered to have been achieved if one no longer fails to achieve the pre-specifiable concentration of oxygen over a pre-specified period of time and/or the reduction of the oxygen concentration no longer exceeds a pre-specified temporal change.

11. The method according to Claim 9 or 10, **characterised in that** the combustion of the specimen (8) is implemented in a heated combustion chamber (2) to which is connected an exhaust gas line in the form of a bypass line(14) through which the combustion gases are withdrawn from the combustion chamber (2) until the specimen (8) has been completely combusted and delivered back to the latter.

12. The method according to Claim 11, **characterised in that** in the bypass line (14) a heated post-combustion chamber (18) is preferably provided in which the combustion gases coming out of the post-combustion chamber (2) are subjected to post-combustion.

13. The method according to any of Claims 9 to 12, **characterised in that** the pressure in the apparatus is set by means of a pressure compensation chamber (22) connected by means of the exhaust gas line (14) and preferably disposed on the outlet side of a post-combustion chamber (18), which is formed between a pressure compensation vessel (25) and a piston (26) guided moveably therein by a positioning member (29), by adjustment of the piston (26) the pressure within the apparatus being set and/or oxygen being sucked into the combustion chamber (2) by means of the oxygen inflow line (13) and/or the combustion gases being delivered to the analyser (B).

14. The method according to Claim 13, **characterised in that** the pressure within the apparatus is measured by means of a pressure sensor (17) and the positioning member (29) is operated such that a desired pressure is set.

15. The method according to any of Claims 9 s 9 to 14, **characterised in that** the analyser (B) comprises a sensor for determining nitrogen (51) upstream of which there is a gas specimen chamber (37) with a defined volume of combustion gas and which is totally filled with combustion gases and then freed from oxygen, any nitrogen oxides contained being converted into nitrogen (N₂) and being delivered to the sensor for nitrogen determination (51).

## Revendications

1. Dispositif pour déterminer la composition d' un échantillon (8) notamment protéique avec une chambre de combustion (2) en vue de la combustion de l'échantillon à analyser (8), un conduit d'échappement (14) raccordé à la chambre de combustion (2), un dispositif de chauffage (3) pour chauffer la chambre de combustion (2) un capteur d'oxygène (21) pour déterminer la teneur en oxygène dan les gaz de combustion et un dispositif de commande pour commander la combustion, sachant qu' un conduit d'arrivée d'oxygène (13) débouche dans la chambre de combustion (2) avec une vanne d'entrée d'oxygène (15), qui peut être actionnée par le dispositif de commande et qu'un analyseur (B) est raccordé à la chambre de combustion (2), sachant que le dispositif est conçu de telle manière que la teneur en oxygène est déterminée dans les gaz de combustion pendant la combustion de l'échantillon (8) selon des intervalles temporels ou de manière continue au moyen du capteur d'oxygène (21) et en cas de dépassement de la limite inférieure d'une concentration en oxygène déterminable au préalable, une quantité définie d'oxygène est versée dans la chambre de combustion (2) par la vanne d'arrivée d'oxygène (15) et les gaz de combustion sont conduits à l'analyseur (B) après combustion complète de l'échantillon (9), où notamment la teneur en azote et / ou en dioxyde de carbone et / ou en dioxyde de soufre et / ou en eau dans la chambre de combustion est déterminée, **caractérisé en ce que** le capteur d'oxygène (21) est raccordé au dispositif de commande et dans le conduit d'échappement (14), une chambre d'équilibrage de pression (22) est prévue, qui est formée entre un récipient d'équilibrage de pression (25) et un piston guidé de manière mobile par un actionneur (29) à l'intérieur, sachant qu'au moyen d'un ajustage du piston (26) la pression peut être réglée à l'intérieur du dispositif et / ou l'oxygène peut être aspiré par le conduit d'arrivée d'oxygène dans la chambre de combustion et / ou les gaz de combustion peuvent être conduits à l'analyseur (B).

2. Dispositif selon revendication 1, **caractérisé en ce que** le conduit d'échappement est conçu en tant que conduit de circulation (14), par lequel les gaz de combustion sont évacués de la chambre de combustion (2) pendant la combustion de l'échantillon (8) et ensuite reconduits dans la chambre de combustion (2) et une installation de déplacement, notamment une pompe de circulation (32) ou un compresseur, est prévu pour le transport des gaz de combustion par le conduit de circulation (14), sachant que le capteur d'oxygène (21) est placé de préférence sur le conduit de circulation (14).

3. Dispositif selon revendication 1 ou 2, **caractérisé en ce que** dans le conduit d'échappement (14), en aval par rapport à la chambre de combustion (2), une chambre de postcombustion (18) est prévue, à laquelle est affecté un dispositif de chauffage.

4. Dispositif selon revendication 3, **caractérisé en ce que** la chambre de postcombustion (18) est équipée d'un catalyseur d'oxydation (20), de boules en céramique et / ou sable céramique et que le capteur d'oxygène (21) est prévu de préférence sur le côté échappement de la chambre de postcombustion (18).

5. Dispositif selon l'une des revendications précédentes, **caractérisé en ce que** la chambre d'équilibrage de pression (22) est prévue en aval de la chambre de postcombustion (2) placée en aval de la chambre de combustion (2).

6. Dispositif selon l'une des revendications précédente, **caractérisé en ce que** l'actionneur (29) est relié à un capteur de pression (17) en vue du mesurage de la pression à l'intérieur du dispositif.

7. Dispositif selon l'une des revendications précédentes **caractérisé en ce que** l'élément (14c) de conduit d'échappement (14) éloignant de la chambre d'équilibrage de pression (22), traverse le piston et est entraîné de préférence lors d'un ajustage du piston (16).

8. Dispositif selon l'une des revendications précédentes **caractérisée en ce que**, l'analyseur (B) comprend un capteur en vue de la détermination de l'azote (51) par rapport auquel une chambre d'échantillon gazeux (37) pour la réception d'un volume de gaz de combustion défini est placée en amont, et qu'un conduit d'arrivée de gaz porteur (42) débouche dans la salle d'échantillon gazeux (37) par un régulateur de débit (43).

9. Méthode pour déterminer la composition d'un échantillon notamment protéique (8) dans le cas duquel l'échantillon à analyser (8) est entièrement brûlé dans une atmosphère d'oxygène et la composition des gaz de combustion obtenus est ensuite déterminée sachant que la teneur en oxygène est déterminée dans les gaz de combustion pendant la combustion de l'échantillon (8) selon des intervalles temporels ou de manière continue au moyen du capteur d'oxygène (21), sachant qu'en cas de dépassement de la limite inférieure d'une concentration en oxygène déterminable au préalable, une quantité définie d'oxygène est menée à la combustion et qu'après la combustion complète de l'échantillon (8) les gaz de combustion obtenus sont conduits à un analyseur (B), où notamment la teneur en azote et / ou en dioxyde de carbone et / ou en dioxyde de soufre et / ou en eau dans les gaz de combustion est déterminée, **caractérisée en ce que** la pression dans le dispositif est ajustée au moyen d'une chambre d'équilibrage de pression (22) accouplée par l'intermédiaire du conduit d'échappement (14), qui est conçue entre un récipient d'équilibrage de pression (25) et un piston (26) guidé de manière mobile à l'intérieur par un actionneur (29), sachant qu'au moyen d'un ajustage du piston (26) la pression est réglée à l'intérieur du dispositif et / ou l'oxygène est aspiré par le conduit d'arrivée d'oxygène dans la chambre de combustion et / ou les gaz de combustion sont conduits à l'analyseur (B).

10. Méthode selon revendication 9, **caractérisée en ce que** l'intégralité de la combustion est alors considérée comme obtenue, lorsque la limite inférieure de la concentration en oxygène déterminable au préalable n'est plus dépassée dans un laps de temps fixé et / ou la diminution de la concentration en oxygène ne dépasse plus une modification temporelle fixée.

11. Méthode selon revendication 9 ou 10, **caractérisée en ce que** la combustion de l'échantillon (8) est exécutée dans une chambre de combustion chauffée (2) à laquelle un conduit d'échappement est raccordé en tant que conduit de circulation (14), à travers lequel les gaz de combustion sont retirés de la chambre de combustion (2) jusqu'à la combustion complète de l'échantillon (8) et sont reconduits à celle-ci.

12. Méthode selon revendication 11, **caractérisée en ce que** dans le conduit de circulation (14) de préférence une chambre de postcombustion (18) chauffée est prévue, dans laquelle les gaz de combustion provenant de la chambre de postcombustion (2) sont soumis à une postcombustion.

13. Méthode selon l'une des revendications 9 à 12, **caractérisée en ce que** la chambre d'équilibrage de pression (22) est placée sur le côté échappement de la chambre de postcombustion (18).

14. Méthode selon l'une des revendications 9 à 13, **caractérisée en ce que** par un capteur de pression (17), la pression à l'intérieur du dispositif est mesurée et l'actionneur (29) est commandé de manière à ajuster une pression souhaitée.

15. Méthode selon l'une des revendications 9 à 14, **caractérisée en ce que** l'analyseur (B) comprend un capteur pour la détermination de l'azote (51) par rapport auquel une chambre d'échantillon gazeux (37) avec un volume de gaz de combustion défini est placée en amont, qui est remplie entièrement par des gaz de combustion et ensuite est libérée de l'oxygène, les oxydes d'azote contenus sont transformés en azote (N2) et sont conduits vers le capteur en vue de la détermination d'azote (51).
